# EUROPEAN PATENT SPECIFICATION

(11) **EP 4 612 808 B1**
(45) Date of publication and mention of the grant of the patent: **20.05.2026**
(21) Application number: 23790704.3
(22) Date of filing: 24.10.2023
(51) Int. Cl.: H04B 10/11, H04B 10/50, H04B 10/548, H04B 10/69

(54) **A WIRELESS OPTICAL COMMUNICATION DEVICE, SYSTEM AND COMMUNICATION METHOD**
DRAHTLOSE OPTISCHE KOMMUNIKATIONSVORRICHTUNG, SYSTEM UND KOMMUNIKATIONSVERFAHREN
DISPOSITIF, SYSTÈME ET PROCÉDÉ DE COMMUNICATION OPTIQUE SANS FIL

(30) Priority: 31.10.2022 EP 22204650
(43) Date of publication of application: 10.09.2025
(73) Proprietor: Signify Holding B.V., 5656 AE Eindhoven (NL)
(72) Inventor: SIECZKOWSKI, Maciej, Konrad, 5656 AE Eindhoven (NL)
(74) Representative: Verweij, Petronella Daniëlle
(86) International application number: PCT/EP2023/079564
(87) International publication number: WO 2024/094474

(56) References cited:
- CN-A- 106 375 002
- ABDULKAFI AYAD ATIYAH ET AL: "Multilayered optical OFDM for high spectral efficiency in visible light communication system", PHOTONIC NETWORK COMMUNICATIONS, KLUWER ACADEMIC PUBLISHERS, DORDRECHT, NL, vol. 38, no. 3, 9 September 2019 (2019-09-09), pages 299 - 313, XP036924660, ISSN: 1387-974X, [retrieved on 20190909], DOI: 10.1007/S11107-019-00863-X
- SAAD MSHHAIN ET AL: "A new precoding scheme for spectral efficient optical OFDM systems A R T I C L E I N F O", vol. 419, 23 March 2018 (2018-03-23), pages 125 - 133, XP093039240, Retrieved from the Internet <URL:http://openaccess.altinbas.edu.tr/xmlui/bitstream/handle/20.500.12939/843/O%20UZ.pdf?sequence=1> [retrieved on 20230414], DOI: 10.1016/j.optcom.2018.03.030
- YICHEN LI ET AL: "Non-DC-biased OFDM with Optical Spatial Modulation", 2013 IEEE 24TH ANNUAL INTERNATIONAL SYMPOSIUM ON PERSONAL, INDOOR, AND MOBILE RADIO COMMUNICATIONS (PIMRC), 1 September 2013 (2013-09-01), pages 486 - 490, XP055217400, ISBN: 978-1-46-736235-1, DOI: 10.1109/PIMRC.2013.6666185

## Description

### FIELD OF THE INVENTION

This invention relates to optical wireless communication systems.

### BACKGROUND OF THE INVENTION

Li-Fi (Light Fidelity) is a new type of Optical Wireless Communication (OWC), which also includes Visible Light Communication (VLC). OWC (and hence Li-Fi and VLC) use light as a media of communication, for replacing cable wire (wireline) communication.

Light based communication offers the ability for high data rate communication, for example even exceeding 10 Gbit/s, for devices having a line of sight between them. This for example applies to a set of communicating devices within an office environment.

Known Li-Fi products rely on a grid of optical access points mounted in the ceiling. The beams of these access points are wide enough (and thereby have a large field of view and/or coverage area) to create an overlap with the neighboring access points at the level of the desks beneath. The receiving devices in such a system are typically located at the desks or are being held by hand at a height close thereto.

For ease of installation, the grid of access points is for example aligned with the luminaire grid in the ceiling. Each access point in such an installation must reach (illuminate, in the case of visible light) several square meters and hence illuminates a significant conical area. Such installations may utilize illumination light for the downlink (to the end devices) and may use invisible light (e.g. infrared or ultraviolet) for the uplink (towards the access point) so as not to disturb mobile device users. Alternatively, both downlink and uplink may utilize invisible light thereby at least partially or fully disentangling the lighting and communication infrastructure.

To communicate with the access points, currently a dongle is connected to a user device such as a laptop or tablet. These dongles also emit a similar broad beam to be sure that at least one access point will receive the signal from the dongle. The beams of the access points and the dongles are fixed in direction, so no adjustment of the beam direction is required.

Each access point comprises a modem connected to one or multiple optical transceivers. The end devices (e.g., laptop with dongle) connect to the access point via an optical link and they also comprise a modem connected to one or multiple transceivers.

The function of the modem is to handle the protocols (modulate and demodulate) for transmitting and receiving data over the visible or invisible light connection. The modem transmitter includes an optical frontend which transforms an electrical signal of the transmit data to an optical signal/light signal (for example using an LED) and the modem receiver transforms the optical signal/light signal to an electrical receive data signal (using a photodiode).

A large unlicensed bandwidth (in the range of THz) is available for Li-Fi communication. Li-Fi typically uses orthogonal frequency division multiplex, OFDM, signaling to achieve high speed communication with bandwidth-limited electro-optical transmitters (such as LEDs or vertical cavity surface emitting lasers, VCSELs).

Since OFDM signaling makes use of a bipolar signal, the typical approach for Li-Fi is uses a DC biased optical OFDM, DCO-OFDM, transmitter, coupling an OFDM signal onto a DC bias. Because of the high Peak-to-Average Power Ratio, PARR, of the OFDM signal, a high DC bias is needed to achieve a low distorted optical OFDM signal.

Several approaches have been proposed to create a unipolar OFDM signal, including asymmetrically clipped optical OFDM, ACO-OFDM, Flip-OFDM and others. These all aim to reduce the power consumption by eliminating (or reducing) high DC bias of the electro-optical component.

One proposed solution is disclosed in the article "Multilayered optical OFDM for high spectral efficiency in visible light communication systems", Photonic network communications, Kluwer Academic Publishers, vol. 38, no. 3, September 9th 2019, this aims to improve spectral efficiency of an optical OFDM VLC system. The proposed multilayered/enhanced CMO-OFDM (LeCMO-OFDM) systems ensure the real-valued optical OFDM signals without using Hermitian symmetry and utilize the redundant codes existed in CMO-OFDM for further improvements in system's spectral efficiency while ensuring acceptable bit error rate (BER) performance.

Another proposed solution is disclosed in the article "Color Multiplexing Based Unipolar OFDM for Indoor RGB LED Visible Light Communication" of Chen Chen at. al., Procedia Engineering Vol. 140, 2016, pp. 159-165. This approach is termed CMO-OFDM and involves sending positive and negative parts of the OFDM signal over two different wavelengths, using two optical receivers with corresponding optical filters and combining the OFDM signal in the electrical domain or in the logical domain (after digitalization, before demodulation).

However, it is not possible to use existing OFDM chipsets to transmit or receive using the above CMO-OFDM approaches. In particular, it provides separation of the modulation signal into different polarity components before A/D conversion, so requires two A/D converters.

### SUMMARY OF THE INVENTION

The invention is defined by the claims.

According to examples in accordance with an aspect of the invention, there is provided a transmitter circuit for transmitting data using optical wireless communication, comprising:
a first light emitting element arranged to emit light having a first light characteristic;
a second light emitting element, topologically in series with the first light emitting element, arranged to emit light having a second light characteristic, different to the first light characteristic;
a bias circuit for setting bias conditions of the light emitting elements;
a drive circuit for driving the first and second light emitting elements using a bipolar modulation signal such that a first polarity of the bipolar modulation signal is for driving through the first light emitting element to a reference terminal, and an opposite second polarity of the bipolar modulation signal is for driving through the second light emitting element to the reference terminal, to thereby implement bipolar OFDM modulation.

The OFDM signaling is bipolar, and both polarities are used for transmission, so that capacity is not sacrificed. The light emitting elements are unidirectional components, such as LEDs, VCSELs, edge emitting laser diodes, or other diode laser components, and they are connected such that one is in a forward current direction (relative to the connection from the drive circuit to the light emitting element) and the other is in a negative current direction. The term "topologically in series" refers to the physical electrical layout of the light emitting elements, for example with the series connection as anode1-cathode1-anode2-cathode2. Electrically, this provides a series connection for DC signals but the connection may be considered to be in parallel for AC signals.

One light emitting element is used for the generation of light during one polarity of an OFDM modulated signal and the other is used for the generation of light during an opposite polarity of the OFDM modulated signal. The bias generated by the bias circuit moves the operating point of the first and second light emitting elements so that separation of the opposite polarity components takes place in the optical domain and a single bipolar modulation signal drives the two light emitting elements, in a time-interleaved manner. Thus, there is a single bipolar modulation signal, requiring a single A/D conversion. This means that existing OFDM chipsets can be used.

The first polarity of the bipolar modulation signal is not intended to generate any light output from the second light emitting element and the second polarity of the bipolar modulation signal is not intended to generate any light output from the first light emitting element.

The first and second optical characteristics allow separation of the two polarities of the modulation at the receiver side.

A known way to transmit a bipolar OFDM signal on a unipolar channel is to add a DC bias of half the total signal amplitude. In contrast, the invention enables use of different light emitting elements, each with a minimal DC bias, so that only the relevant half of the voltage swing is used in the forward mode. The separation is thus achieved in the optical (wavelength or polarization) domain and this saves power by avoiding the need for a large bias voltage or current. In particular, the proportion of the total power consumption of the output stage which is required by the DC bias function is reduced (e.g. from around 50% of the total power consumption to about 20%, but depending on the application).

The first and second optical characteristics may be different wavelength characteristics and/or different polarization characteristics.

Different wavelengths for example comprise wavelength ranges with a different intensity vs. wavelength profile, for example with different wavelengths at the peak intensity, i.e. different dominant wavelengths. The wide spectra of different LEDs may however overlap. This will have an influence on the signal to noise ratio, but the system does not require perfect separation in order to achieve suitable signal to noise ratios.

Different polarization characteristics for example are implemented using circular polarization modulation, or linear polarization for fixed transmitter receiver pairs where the polarization direction can be properly aligned during setup/commissioning.

In all cases, the opposite polarities of the modulation signal can be separated in the optical domain rather than the electrical domain.

The drive circuit for example comprises an OFDM modulator circuit.

The drive circuit may comprise an OPAMP circuit. For example, the drive circuit comprises an OPAMP which is controllable in an inverting and a non-inverting mode of operation. Thus, both polarities of a bipolar OFDM modulation may be used.

The drive circuit for example comprises a negative feedback circuit connected to an inverting input of the OPAMP. This is used to regulate the OPAMP output.

The transmitter circuit for example comprises a current sensor for sensing a current flowing to the reference terminal and the feedback circuit comprises a coupling capacitor for coupling a current sense voltage to the inverting input of the OPAMP.

This current feedback makes the circuit operate in a current control mode rather than a voltage control mode. For LEDs at least, the light output intensity is (more) correlated with the driver current, so operating the circuit in a current control mode avoids issues with the non-linearity of the I-V characteristics and non-linearity of the light output with respect to voltage.

The transmitter circuit for example comprises a first AC coupling circuit between an output of the drive circuit and the first and second light emitting elements. A second AC coupling circuit may also be provided between the first and second light emitting elements and the reference terminal.

The light emitting elements comprise LEDs or VCSELs.

The invention also provides a receiver circuit for receiving data using optical wireless communication, comprising:
a first light sensing element having a first light sensing characteristic for sensing an incident OFDM modulated light signal and having a first light characteristic;
a second light sensing element having a second light sensing characteristic, topologically in series with the first light emitting element with the same polarity, for sensing an incident OFDM modulated light signal having a second light characteristic, the second light sensing characteristic, different to the first light sensing characteristic, wherein the first and second light sensing elements are connected at a junction node;
a bias circuit for setting bias conditions of the first and second light sensing elements; and
an amplifier for receiving a sensed current signal from the junction node, the sensed current signal being generated by the first or second light sensing element depending on a polarity of the OFDM modulation, thereby to implement bipolar OFDM reception.

The light sensing elements operate in a differential manner (in that the amplifier is connected to the node between them), so that the signal delivered to the amplifier is the difference between the currents of the two light sensing elements. This, in combination with optical filters, makes the receiver capable of receiving the OFDM signal as generated using the claimed transmitter circuit. The light sensing elements are for example photodiodes or phototransistors.

The two received polarities are received as a single modulation signal.

The receiver circuit for example comprises an OFDM demodulator circuit for receiving the amplified sensed current signal.

The light sensing characteristics for example comprise different wavelength reception characteristics. A respective band pass optical filter may be provided for the first and second light sensing elements. This provides a narrow reception bandwidth for each light sensing element.

An RF blocking circuit is for example provided for receiving any DC imbalance between the sensed current signals of the first and second light sensing elements.

The light sensing elements for example comprise photodiodes.

The invention also provides a wireless optical communications system comprising:
one or more transmitter circuits each as defined above; and
one or more receiver circuits each as defined above.

The invention also provides a method for transmitting data using optical wireless communication, comprising:
setting bias conditions of the first and second light emitting elements, wherein the first light emitting element is arranged to emit light having a first optical characteristic and the second light emitting element is topologically in series with the first light emitting element and is arranged to emit light having a second light characteristic, different to the first optical characteristic;
driving a first polarity of a bipolar modulation signal through the first light emitting element to a reference terminal; and
driving a second polarity, opposite to the first polarity, of the bipolar modulation signal through the second light emitting element to the reference terminal,
thereby implementing bipolar OFDM modulation.

The invention also provides a method of receiving data using optical wireless communication, comprising:
sensing an incident OFDM modulated light signal having a first light characteristic using a first light sensing element having a first light sensing characteristic;
sensing an incident OFDM modulated light signal having a second light characteristic using a second light sensing element, topologically in series with the first light emitting element with the same polarity, the second sensing element having a second light sensing characteristic, different to the first light sensing characteristic; the first and second light sensing elements connected at a junction node;
setting bias conditions of the first and second light sensing elements; and
receiving a sensed current signal from a junction node between the first and second light sensing elements, the sensed current signal being generated by the first or second light sensing element depending on a polarity of the OFDM modulation,
thereby to implementing bipolar OFDM reception.

The invention provides options for designing and building compact, power efficient OFDM transmitters and receivers using commonly available components.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a typical LiFi system;
Fig. 2 shows an architecture for an OFDM transmitter;
Fig. 3 shows current paths through the circuit of Figure 2;
Fig. 4 shows an example of LED forward current vs. forward voltage characteristic and shows how the bias point and modulation are implemented; and
Fig. 5 shows an architecture for the OFDM receiver.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a LiFi transmitter which has first and second light emitting elements with different optical characteristics (wavelengths or polarizations). A bias circuit sets an operating point and sets bias conditions for the first and second light emitting elements. A first polarity of a modulation current (e.g. positive) is driven through the first light emitting element and a second polarity of the modulation current (e.g. negative) is driven through the second light emitting element, thereby to implement bipolar OFDM modulation. A corresponding receiver has first and second light sensing elements with different sensing characteristics and a bias circuit. A sensed difference current signal is amplified, and it is generated by the first or second light sensing element depending on the polarity of the OFDM modulation, thereby to implement bipolar OFDM reception.

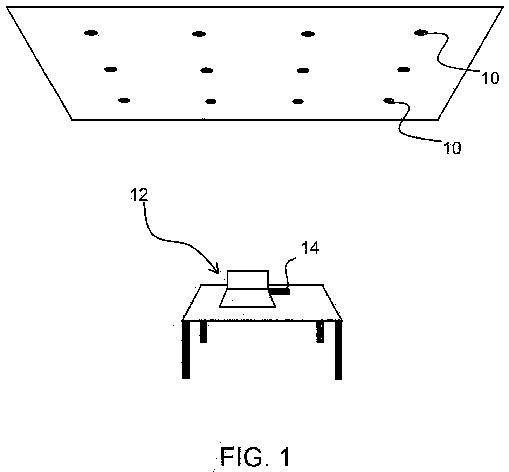

Figure 1 shows a typical LiFi system with a set of access points, AP, 10 forming a ceiling mounted infrastructure and a LiFi end device (also known as a station, STA) implemented by a dongle 14 attached to a mobile device such as a laptop 12. The combination of units 12 and 14 is the end device (also known as an end point). The access points are preferably linked to a backbone, e.g. by means of a wired link such as an Ethernet link using a twisted pair cable or an Optical Fiber network allowing the access points and/or a global system controller to align, e.g. on handover.

Each AP contains a modem connected to one or multiple LiFi transceivers. The end devices can connect to an AP via an optical link. Each end device also contains a modem connected to one or multiple LiFi transceivers. The function of the LiFi-modem is to handle the physical layer (PHY) and media access control layer (MAC) protocols for transmitting and receiving data over the visible or invisible light connection.

The LiFi transceiver comprises a transmitter to transform an electrical signal of the modem's transmit data to an optical signal/light signal (e.g. via an LED, a VCSEL or laser diode) and to provide a receiver to transform an optical signal/light signal to an electrical of the modem's receive data (e.g. via a photodiode). The end device is for example implemented by a dongle 14 attached to a mobile device such as a laptop. Instead of retrofitting, it is envisaged that the receiver functionality is ideally integrated with the user receiving devices themselves, in this manner laptops, tablets, mobile phones and/or other devices may use optical communication without the need for a dongle.

The invention can be construed from different angles, on the one hand it provides a power efficient alternative for DCO-OFDM transmission, but on the other hand it also provides for a solution that allows typical bipolar OFDM modulators to be used for implementing the CMO-OFDM signaling approach outlined above. The prior art CMO-OFDM approach uses a special baseband chipset, which splits the generated OFDM data into positive and negative parts in the digital domain (before Digital-to-Analogue conversion). It is a theoretical solution which cannot be used with existing OFDM chipsets (e.g., G.hn, G.vlc).

The invention provides a solution to enable existing OFDM chipsets to implement CMO-OFDM signaling, i.e. transmission and reception.

In particular, the invention provides transmitter and receiver topologies which allow the use of OFDM modulators that output bipolar electrical signals for use in optical intensity modulated (IM) OFDM systems, which means that they can use existing OFDM chipsets with a single A/D and D/A conversion capability.

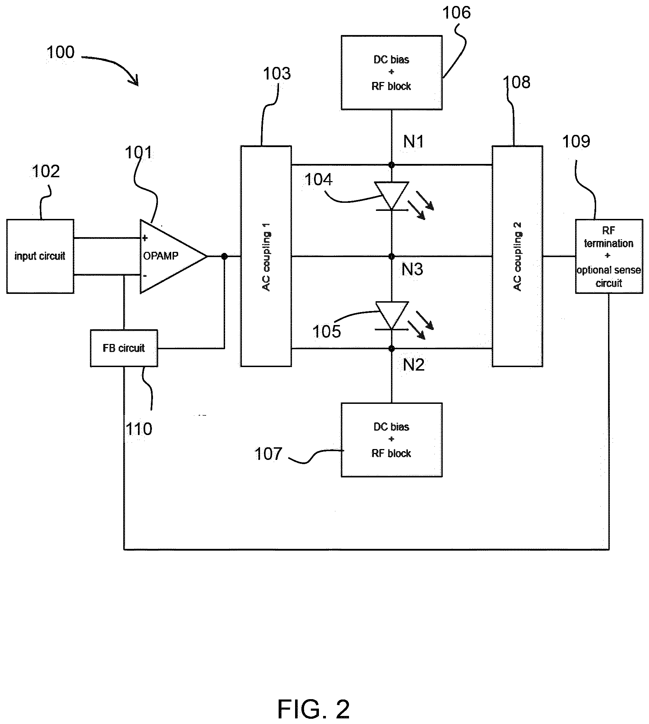

Figure 2 shows an architecture for a (CMO-)OFDM transmitter 100.

The transmitter 100 comprises a high bandwidth, high output current OPAMP 101 which can be used in both inverting or non-inverting configuration dependent on an input circuit 102 and a feedback circuit 110. The OPAMP receives a drive signal from an input circuit 102 which includes an OFDM modulator circuit and a D/A converter for the modulation signal. Together, the OPAMP 101, output circuit 102 and feedback circuit 110 may be considered to constitute a drive circuit for driving an analog current modulation.

The input circuit comprises an OFDM modulator circuit. The input circuit provides signals to the inverting and non-inverting inputs of the OPAMP 101 so that the OPAMP can be operated in inverting and non-inverting modes. The feedback circuit 110 connects to the inverting input as well as to the output of the OPAMP to provide a negative feedback loop. The feedback circuit is also optionally controlled by an output from a current sensing circuit as discussed further below.

Two light emitting elements, e.g. LEDs or VCSELs 104, 105, are provided, having different optical characteristics. These different optical characteristics enable separation of the generated optical signals/light signals at a receiver side in the optical domain. The description below is for the preferred example of different wavelengths, i.e. a different wavelength at which the output intensity is a peak. To separately receive the signals in the optical domain, different optical band pass filters may be used.

However, the different optical characteristics may instead comprise different polarizations, thereby implementing polarization modulation.

The light emitting elements are each DC biased using respective a DC bias circuit 106, 107. Each DC bias circuit also provides a high impedance RF blocking function. The bias circuits for example comprise a linear current source circuit or a switched current source circuit, or a voltage source could be used, for example assuming that the I-V characteristic of the light source is known and there is not a large spread between components.

The two light emitting elements are connected between a first output node N1 of the first DC bias circuit 106 and a second output node N2 of the second DC bias circuit 107. They are connected topologically in series with the same polarity (i.e. the cathode of the first is connected to the anode of the second) with a junction N3 between them. They are thus electrically in series for DC signals (but at AC frequencies they may be considered to be in parallel).

The RF current from the OPAMP flows through a first AC coupling circuit 103 to the light emitting elements 104, 105 and to a second AC coupling circuit 108 to a current sense and termination circuit 109. The current sense circuit comprises a current sense resistor and a reference terminal such as ground which is a sink for the current. This current sense and termination circuit is however optional.

When the current sense option is used, the signal from the sense resistor is used in the OPAMP feedback circuit 110. The RF current is split by the topology in such a way that positive and negative RF current flows through the different light emitting elements.

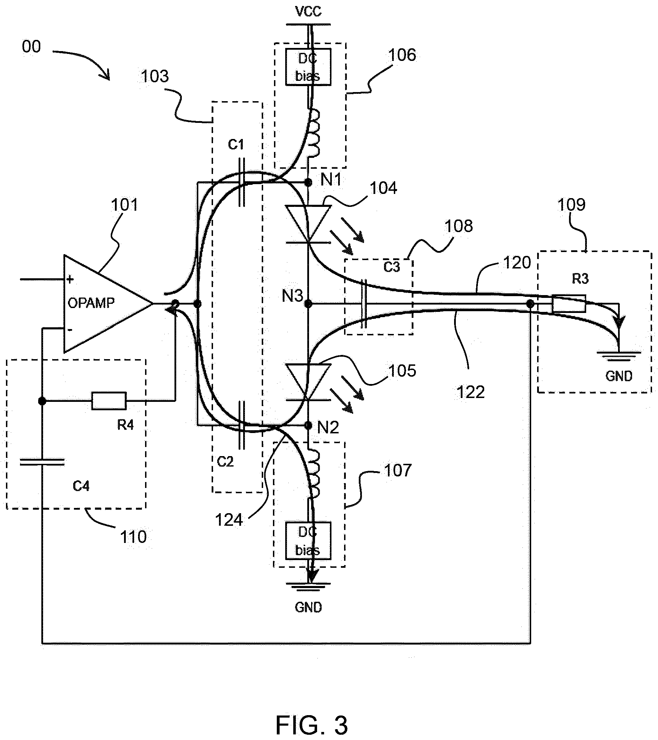

The current paths are shown in Figure 3.

A first current path 120 flows from the OPAMP 101 through the first light emitting element 104 via the first AC coupling, shown as capacitor C1, and through the second AC coupling, shown as capacitor C3, to ground, via the sense resistor R3. This is the positive OPAMP output RF current and is thus the positive polarity of the bipolar OFDM modulation current.

A second current path 122 flows from ground, through the current sense resistor R3 and the second AC coupling, again capacitor C3, through the second light emitting element 105 and to the OPAMP 101 via the first AC coupling, shown as capacitor C2. This is the negative OPAMP output RF current and is thus the negative polarity of the bipolar OFDM modulation current.

During modulation, the voltage at node N3 will be changing due to the voltage drop across the sense resistor and AC coupling capacitor C4.

In this example, the first AC coupling circuit 103 thus comprises a first capacitor C1 between the OPAMP output and the first node N1 and a second capacitor C2 between the OPAMP output and the second node N2, and the second AC coupling circuit 104 comprises a third capacitor between the central node N3 and ground.

The AC coupling circuits can be designed in various ways and in specific cases one of them can be omitted.

The feedback from the current sense resistor R3 is AC coupled using a coupling capacitor C4 to the inverting input of the OPAMP. A resistor R4 provides the DC feedback to define the DC output voltage for the OPAMP. The current feedback means the circuit is current-controlled. This avoids issues arising from the non-linearity of the I-V characteristic of the light emitting elements.

Thus, the capacitor C4 and resistor R4 together give an example of possible feedback circuit 110.

In an IDLE state (with no modulation) a bias current generated by the bias circuits flows only through the light emitting elements (in that the capacitors of the coupling circuit 103 are charged up to the forward voltage of LEDs). During modulation, each of the two AC coupling capacitors C1, C2 only passes one polarity of the modulation current, which means they are effectively being discharged. This reduces the forward voltage of the light emitting element and thus causes part of the bias current to charge the capacitors back.

During the IDLE state, the voltage at nodes N1 and N2 are such that a desired bias voltage is present relative to the node N3. N3 is for example at a voltage around half of the supply voltage (depending on the difference in forward voltages of two light emitting elements).

During this IDLE time, as a simplification, the bias current flows only through the light emitting elements. The bias current is for example in the range 15mA -20mA. The bias current is thus low, and a non-linear part of the I-V characteristic of the light emitting element is being used. For example, forward voltages of LEDs may be around 2.2V.

There are two aims of the bias circuits:
(i) At a zero-crossing of the modulation signal there will be some forward current flowing through the light emitting elements - if this is too low the light emitting element loses electro-optical bandwidth, so the bias current makes sure that the light emitting elements have a sufficient response speed.
(ii) During modulation, a forward current is pushed current though one of the light emitting elements. Because the circuit acts as a current source for driving the light emitting elements, the voltages are not directly controlled. However, the voltage increase at the OPAMP output, that corresponds to the forward current for the first light emitting element, is also applied to the second light emitting element (and vice versa). The bias current is set in a way that ensures that the light emitting element which is not currently being driven does not enter a reverse polarity state. This requires a forward voltage of the driven light emitting element to be greater than a threshold. It is desirable to prevent the reverse polarity state because the reverse polarity recovery of a LED is very slow (at the OFDM modulation frequency). For a LED, a very low bias current is able to achieve the desired relatively high forward voltage and hence the desired operating point can be achieved with low power consumption.

The bias circuits thus set the bias conditions of the light emitting elements, in particular to set operating voltages. However, the bias circuits may in practice be implemented as current source circuits used to set the forward voltages of the light emitting elements and thereby set operating voltages in an indirect way.

During modulation, a current flows in one direction through C1 and in the other direction through C2. Considering C1 only, in the IDLE state, the capacitor C1 is charged to a specific voltage dependent on the IDLE state output voltage, the bias point of the light emitting elements and their characteristics. During modulation, only one polarity of the modulation current flows through C1 and thus discharges the capacitor. At the moment in the modulation cycle when the bipolar signal is crossing zero, no AC current is flowing through C1 or C2. The modulation current was discharging C1 and C2, which means that the voltage across C1 and C2 is lower compared to the IDLE state.

The sum of the voltages across C1 and C2 is equal to the sum of the forward voltages of the two light emitting elements. If this voltage has decreased, then the bias current through the light emitting elements has also decreased. Thus, the bias current through the light emitting elements changes during modulation.

A difference in the LED bias current will flow through C1 and C2 in the opposite direction to the modulation current, thus preventing (or slowing down) further discharging of C1 and C2. Thus, there is a balancing current, shown as 124, which is equal to the average current through the light emitting elements. The average current of the light emitting elements is therefore the same. The DC balancing current flows from a DC positive voltage VCC through the first capacitor C1 and second capacitor C2 to ground, and it is generated by the DC bias and RF blocking circuits 106, 107.

The DC bias circuits thereby provide both the bias for LEDs and a balancing current for the capacitors C1 and C2. The circuit can for example be designed in such a way that the balancing current is used only during modulation to decrease the power consumption.

The G.hn / G.vlc protocols used in LiFi are TDMA (Time-Division Multiple Access) protocols, which means that the data is not transmitted continuously. Because of this, a certain imbalance in the current of the AC coupling capacitors is acceptable and the balance will be achieved again during a receive timeframe.

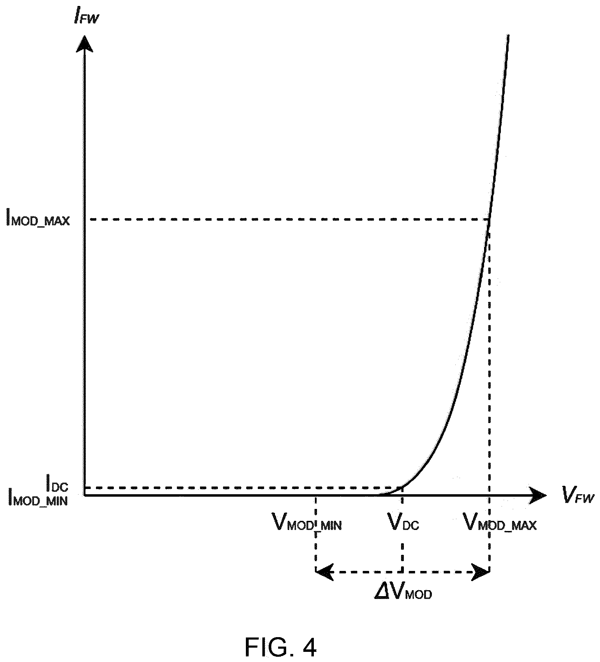

Figure 4 shows an example of LED forward current (I_{FW}) vs. forward voltage (V_{FW}) characteristic with the intended DC bias point (V_{DC}) and modulation (from V_{MOD_MIN} to V_{MOD_MAX}). As can be seen the DC bias corresponds to a very low bias current I_{DC}. Experimental values show that a DC bias current around 15mA is sufficient.

The transmitter circuit enables a lower power consumption compared to a traditional DCO-OFDM transmitter.

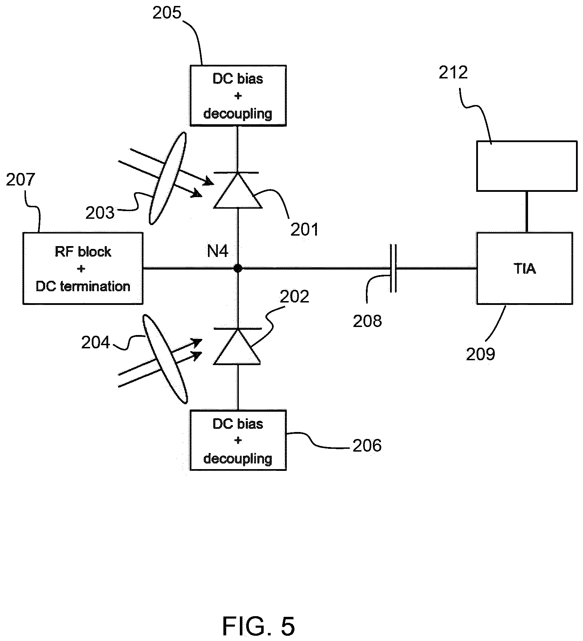

Figure 5 shows an architecture for the (CMO-)OFDM receiver 200.

The receiver comprises two photodiodes 201, 202, each equipped with a respective band-pass optical filter 203, 204 matching the wavelength of the LED or VCSEL transmitter. The optical filters may be separate parts or they may be built into the photodiode structure.

The first and second photodiodes are topologically in series between a first and second DC bias and decoupling circuit 205, 206. The connect at a junction node N4. A circuit 207 for RF blocking and DC termination provides a DC path for any photocurrent imbalance.

The difference of the RF photocurrent between the two photodiodes 201, 202 is AC coupled from the junction node N4 through an AC coupling capacitor 208 to a transimpedance amplifier, TIA, 209. It is also possible to use a DC coupled TIA without the need for the AC coupling capacitor.

A sensed current signal is received from the junction node N4 and the current is generated by the first or second light sensing elements depending on a polarity of the OFDM modulation of the optical wireless signal that has been received.

The TIA delivers the received signal to an OFDM demodulator circuit 212 which includes A/D conversion of the combined received signal (i.e. both polarities are reconstructed and create a single modulation signal before a single A/D conversion).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A transmitter circuit (100) for transmitting data using optical wireless communication, comprising:
a first light emitting element (104) arranged to emit light having a first light characteristic;
a second light emitting element (105) arranged to emit light having a second light characteristic different to the first light characteristic; and
a drive circuit (101,102,110) for driving the first and second light emitting elements using a bipolar modulation signal,
wherein
the second light emitting element is topologically in series with the first light emitting element, and the transmitter circuit comprises:
a bias circuit (106, 107) for setting bias conditions of the light emitting elements; and
a drive circuit (101,102,110) for driving the first and second light emitting elements using a bipolar modulation signal such that a first polarity of the bipolar modulation signal is for driving through the first light emitting element to a reference terminal, and an opposite second polarity of the bipolar modulation signal is for driving through the second light emitting element to the reference terminal, to thereby implement bipolar OFDM modulation.

2. The transmitter circuit of claim 1, wherein first and second light characteristic comprise different wavelength characteristics or different polarization characteristics.

3. The transmitter circuit of claim 1 or 2, wherein the drive circuit (101,102,110) comprises an OFDM modulator circuit (102).

4. The transmitter circuit of claim 1 or 2, wherein the drive circuit comprises an OPAMP circuit comprising an OPAMP (101) which is controllable in an inverting and a non-inverting mode of operation.

5. The transmitter of circuit of claim 4, wherein the drive circuit (101,102,110) comprises a negative feedback circuit (110) connected to an inverting input of the OPAMP.

6. The transmitter circuit of claim 1 or 2, comprising a current sensor (109) for sensing a current flowing to the reference terminal and the feedback circuit (110) comprises a coupling capacitor (C4) for coupling a current sense voltage to the inverting input of the OPAMP.

7. The transmitter circuit of claim 1 or 2, comprising a first AC coupling circuit (103) between an output of the drive circuit and the first and second light emitting elements.

8. The transmitter circuit of claim 7, comprising a second AC coupling circuit (106) between the first and second light emitting elements and the reference terminal.

9. A receiver circuit (200) for receiving data using optical wireless communication, comprising:
a first light sensing element (201) having a first light sensing characteristic for sensing an incident OFDM modulated light signal having a first light characteristic;
a second light sensing element (202) having a second light sensing characteristic, for sensing incident OFDM modulated light signal having a second light characteristic, the second light sensing characteristic, different to the first light sensing characteristic,
wherein
the second light sensing element is topologically in series with the first light emitting element with the same polarity and the first and second light sensing elements are connected at a junction node; and
the receiver circuit comprises:
a bias circuit (205,206) for setting bias conditions of the first and second light sensing elements; and
an amplifier (209) for receiving and amplifying a resulting sensed current signal from the junction node between the first and second light sensing elements.

10. The receiver circuit of claim 9, comprising an OFDM demodulator circuit (212) for receiving the amplified resulting sensed current signal.

11. The receiver circuit of claim 9 or 10, wherein the different light sensing characteristics comprise different wavelength sensing responses, and the receiver circuit further comprises a respective band pass optical filter for the first and second light sensing elements.

12. The receiver circuit of claim 9 or 10, comprising an RF blocking circuit for providing a current path for current resulting from any DC imbalance between the sensed current signals of the first and second light sensing elements.

13. A wireless optical communications system comprising:
one or more transmitter circuits each as claimed in claim 1; and
one or more receiver circuits each as claimed in claims 9.

14. A method for transmitting data using optical wireless communication, comprising:
using a first light emitting element to emit light having a first light characteristic;
using a second light emitting element to emit light having a second light characteristic, different to the first light characteristic;
driving the first and second light emitting elements using a bipolar modulation signal,
wherein
the second light emitting element is topologically in series with the first light emitting element;
and the method comprises:
setting bias conditions of the first and second light emitting elements, and and wherein driving the first light emitting element comprises driving a first polarity of a bipolar modulation signal through the first light emitting element to a reference terminal; and driving the second light emitting element comprises driving a second polarity, opposite to the first polarity, of the bipolar modulation signal through the second light emitting element to the reference terminal, thereby implementing bipolar OFDM modulation.

15. A method of receiving data using optical wireless communication, comprising:
sensing an incident OFDM modulated light signal having a first light characteristic using a first light sensing element having a first light sensing characteristic;
sensing an incident OFDM modulated light signal having a second light characteristic using a second light sensing element, the second sensing element having a second light sensing characteristic, different to the first light sensing characteristic;
wherein
the second light sensing element is topologically in series with the first light emitting element with the same polarity and the first and second light sensing elements are connected at a junction node; and
the method comprises:
setting bias conditions of the first and second light sensing elements; and
receiving and amplifying a resulting sensed current signal from the junction node between the first and second light sensing elements.

## Patentansprüche

1. Senderschaltung (100) zum Senden von Daten unter Verwendung optischer drahtloser Kommunikation, umfassend:
ein erstes lichtemittierendes Element (104), das angeordnet ist, um Licht mit einer ersten Lichteigenschaft zu emittieren;
ein zweites lichtemittierendes Element (105), das angeordnet ist, um Licht mit einer zweiten Lichteigenschaft zu emittieren, die sich von der ersten Lichteigenschaft unterscheidet; und
eine Ansteuerungsschaltung (101,102,110) zum Ansteuern des ersten und des zweiten lichtemittierenden Elements unter Verwendung eines bipolaren Modulationssignals,
wobei
das zweite lichtemittierende Element topologisch in Reihe mit dem ersten lichtemittierenden Element geschaltet ist, und die Senderschaltung umfasst:
eine Vorspannungsschaltung (106, 107) zum Einstellen von Vorspannungsbedingungen der lichtemittierenden Elemente; und
eine Ansteuerungsschaltung (101,102,110) zum Ansteuern des ersten und des zweiten lichtemittierenden Elements unter Verwendung eines bipolaren Modulationssignals derart, dass eine erste Polarität des bipolaren Modulationssignals zum Ansteuern durch das erste lichtemittierende Element zu einem Referenzanschluss dient, und eine entgegengesetzte zweite Polarität des bipolaren Modulationssignals zum Ansteuern durch das zweite lichtemittierende Element zu dem Referenzanschluss dient, um dadurch eine bipolare OFDM-Modulation zu implementieren.

2. Senderschaltung nach Anspruch 1, wobei erste und zweite Lichteigenschaften verschiedene Wellenlängeneigenschaften oder verschiedene Polarisationseigenschaften umfassen.

3. Senderschaltung nach Anspruch 1 oder 2, wobei die Ansteuerungsschaltung (101,102,110) eine OFDM-Modulatorschaltung (102) umfasst.

4. Senderschaltung nach Anspruch 1 oder 2, wobei die Ansteuerungsschaltung eine OPAMP-Schaltung umfasst, die einen OPAMP (101) umfasst, welcher in einem invertierenden und einem nicht-invertierenden Betriebsmodus steuerbar ist.

5. Senderschaltung nach Anspruch 4, wobei die Ansteuerungsschaltung (101,102,110) eine Gegenkopplungsschaltung (110) umfasst, die mit einem invertierenden Eingang des OPAMP verbunden ist.

6. Senderschaltung nach Anspruch 1 oder 2, umfassend einen Stromsensor (109) zum Erfassen eines zu dem Referenzanschluss fließenden Stroms und wobei die Rückkopplungsschaltung (110) einen Koppelkondensator (C4) zum Koppeln einer Stromerfassungsspannung an den invertierenden Eingang des OPAMP umfasst.

7. Senderschaltung nach Anspruch 1 oder 2, umfassend eine erste AC-Kopplungsschaltung (103) zwischen einem Ausgang der Ansteuerungsschaltung und dem ersten und dem zweiten lichtemittierenden Element.

8. Senderschaltung nach Anspruch 7, umfassend eine zweite AC-Kopplungsschaltung (106) zwischen dem ersten und dem zweiten lichtemittierenden Element und dem Referenzanschluss.

9. Empfängerschaltung (200) zum Empfangen von Daten unter Verwendung optischer drahtloser Kommunikation, umfassend:
ein erstes Lichterfassungselement (201) mit einer ersten Lichterfassungseigenschaft zum Erfassen eines einfallenden OFDM-modulierten Lichtsignals mit einer ersten Lichteigenschaft;
ein zweites Lichterfassungselement (202) mit einer zweiten Lichterfassungseigenschaft zum Erfassen eines einfallenden OFDM-modulierten Lichtsignals mit einer zweiten Lichteigenschaft, wobei die zweite Lichterfassungseigenschaft sich von der ersten Lichterfassungseigenschaft unterscheidet,
wobei
das zweite Lichterfassungselement topologisch in Reihe mit dem ersten lichtemittierenden Element mit derselben Polarität geschaltet ist und das erste und das zweite Lichterfassungselement an einem Verbindungsknoten verbunden sind; und
die Empfängerschaltung umfasst:
eine Vorspannungsschaltung (205,206) zum Einstellen von Vorspannungsbedingungen der ersten und zweiten Lichterfassungselemente; und
einen Verstärker (209) zum Empfangen und Verstärken eines resultierenden erfassten Stromsignals von dem Verbindungsknoten zwischen dem ersten und dem zweiten Lichterfassungselement.

10. Empfängerschaltung nach Anspruch 9, umfassend eine OFDM-Demodulatorschaltung (212) zum Empfangen des verstärkten resultierenden erfassten Stromsignals.

11. Empfängerschaltung nach Anspruch 9 oder 10, wobei die unterschiedlichen Lichterfassungseigenschaften unterschiedliche Wellenlängenerfassungsantworten umfassen, und die Empfängerschaltung ferner einen jeweiligen Bandpass-Optikfilter für das erste und das zweite Lichterfassungselement umfasst.

12. Empfängerschaltung nach Anspruch 9 oder 10, umfassend eine HF-Sperrschaltung zum Bereitstellen eines Strompfads für Strom, der aus einem Gleichstromungleichgewicht zwischen den erfassten Stromsignalen des ersten und des zweiten Lichterfassungselements resultiert.

13. Drahtloses optisches Kommunikationssystem, umfassend:
eine oder mehrere Senderschaltungen, jeweils nach Anspruch 1; und
eine oder mehrere Empfängerschaltungen jeweils nach Anspruch 9.

14. Verfahren zum Senden von Daten unter Verwendung optischer drahtloser Kommunikation, umfassend:
unter Verwendung eines ersten lichtemittierenden Elements zum Emittieren von Licht mit einer ersten Lichteigenschaft;
unter Verwendung eines zweiten lichtemittierenden Elements zum Emittieren von Licht mit einer zweiten Lichteigenschaft, die sich von der ersten Lichteigenschaft unterscheidet;
Ansteuern des ersten und des zweiten lichtemittierenden Elements unter Verwendung eines bipolaren Modulationssignals,
wobei
das zweite lichtemittierende Element topologisch in Reihe mit dem ersten lichtemittierenden Element geschaltet ist;
und das Verfahren umfasst:
Einstellen von Vorspannungsbedingungen des ersten und des zweiten lichtemittierenden Elements, und wobei das Ansteuern des ersten lichtemittierenden Elements das Ansteuern einer ersten Polarität eines bipolaren Modulationssignals durch das erste lichtemittierende Element zu einem Referenzanschluss umfasst; und
das Ansteuern des zweiten lichtemittierenden Elements das Ansteuern einer zweiten Polarität, entgegengesetzt zur ersten Polarität, des bipolaren Modulationssignals durch das zweite lichtemittierende Element zum Referenzanschluss umfasst, wodurch eine bipolare OFDM-Modulation implementiert wird.

15. Verfahren zum Empfangen von Daten unter Verwendung optischer drahtloser Kommunikation, umfassend:
Erfassen eines einfallenden OFDM-modulierten Lichtsignals mit einer ersten Lichteigenschaft unter Verwendung eines ersten Lichterfassungselements mit einer ersten Lichterfassungseigenschaft;
Erfassen eines einfallenden OFDM-modulierten Lichtsignals mit einer zweiten Lichteigenschaft unter Verwendung eines zweiten Lichterfassungselements, wobei das zweite Erfassungselement eine zweite Lichterfassungseigenschaft aufweist, die sich von der ersten Lichterfassungseigenschaft unterscheidet;
wobei
das zweite Lichterfassungselement topologisch in Reihe mit dem ersten lichtemittierenden Element mit derselben Polarität geschaltet ist und das erste und das zweite Lichterfassungselement an einem Verbindungsknoten verbunden sind; und
das Verfahren umfasst:
Einstellen von Vorspannungsbedingungen des ersten und des zweiten Lichterfassungselements; und
Empfangen und Verstärken eines resultierenden erfassten Stromsignals von dem Verbindungsknoten zwischen dem ersten und dem zweiten Lichterfassungselement.

## Revendications

1. Circuit de transmission (100) permettant de transmettre des données à l'aide d'une communication optique sans fil, comprenant :
un premier élément d'émission de lumière (104) agencé pour émettre de la lumière ayant une première caractéristique de lumière ;
un second élément d'émission de lumière (105) agencé pour émettre de la lumière ayant une seconde caractéristique de lumière différente de la première caractéristique de lumière ; et
un circuit de pilotage (101, 102, 110) permettant de piloter les premier et second éléments d'émission de lumière à l'aide d'un signal de modulation bipolaire,
dans lequel
le second élément d'émission de lumière est topologiquement en série avec le premier élément d'émission de lumière, et le circuit de transmission comprend :
un circuit de polarisation (106, 107) permettant de régler des conditions de polarisation des éléments d'émission de lumière ; et
un circuit de pilotage (101, 102, 110) permettant de piloter les premier et second éléments d'émission de lumière à l'aide d'un signal de modulation bipolaire de telle sorte qu'une première polarité du signal de modulation bipolaire permet de piloter le premier élément d'émission de lumière vers une borne de référence, et une seconde polarité opposée du signal de modulation bipolaire permet de piloter le second élément d'émission de lumière vers la borne de référence, pour implémenter de ce fait une modulation OFDM bipolaire.

2. Circuit de transmission selon la revendication 1, dans lequel les première et seconde caractéristiques de lumière comprennent des caractéristiques de longueur d'onde différentes ou des caractéristiques de polarisation différentes.

3. Circuit de transmission selon la revendication 1 ou 2, dans lequel le circuit de pilotage (101, 102, 110) comprend un circuit de modulation OFDM (102).

4. Circuit de transmission selon la revendication 1 ou 2, dans lequel le circuit de pilotage comprend un circuit OPAMP comprenant un OPAMP (101) qui est commandable dans un mode de fonctionnement à inversion et sans inversion.

5. Circuit de transmission selon la revendication 4, dans lequel le circuit de pilotage (101, 102, 110) comprend un circuit de rétroaction négative (110) connecté à une entrée d'inversion de l'OPAMP.

6. Circuit de transmission selon la revendication 1 ou 2, comprenant un détecteur de courant (109) permettant de détecter un courant circulant vers la borne de référence et le circuit de rétroaction (110) comprend un condensateur de couplage (C4) permettant de coupler une tension de détection de courant à l'entrée d'inversion de l'OPAMP.

7. Circuit de transmission selon la revendication 1 ou 2, comprenant un premier circuit de couplage CA (103) entre une sortie du circuit de pilotage et les premier et second éléments d'émission de lumière.

8. Circuit de transmission selon la revendication 7, comprenant un second circuit de couplage CA (106) entre les premier et second éléments d'émission de lumière et la borne de référence.

9. Circuit de réception (200) permettant de recevoir des données à l'aide d'une communication optique sans fil, comprenant :
un premier élément de détection de lumière (201) ayant une première caractéristique de détection de lumière permettant de détecter un signal de lumière à modulation OFDM incidente ayant une première caractéristique de lumière ;
un second élément de détection de lumière (202) ayant une seconde caractéristique de détection de lumière, permettant de détecter un signal de lumière à modulation OFDM incidente ayant une seconde caractéristique de lumière, la seconde caractéristique de détection de lumière étant différente de la première caractéristique de détection de lumière,
dans lequel
le second élément de détection de lumière est topologiquement en série avec le premier élément d'émission de lumière avec la même polarité et les premier et second éléments de détection de lumière sont connectés au niveau d'un nœud de jonction ; et
le circuit de réception comprend :
un circuit de polarisation (205, 206) permettant de régler des conditions de polarisation des premier et second éléments de détection de lumière ; et
un amplificateur (209) permettant de recevoir et d'amplifier un signal de courant détecté résultant provenant du nœud de jonction entre les premier et second éléments de détection de lumière.

10. Circuit de réception selon la revendication 9, comprenant un circuit de démodulation OFDM (212) permettant de recevoir le signal de courant détecté résultant amplifié.

11. Circuit de réception selon la revendication 9 ou 10, dans lequel les différentes caractéristiques de détection de lumière comprennent différentes réponses de détection de longueur d'onde, et le circuit de réception comprend en outre un filtre optique passe-bande respectif pour les premier et second éléments de détection de lumière.

12. Circuit de réception selon la revendication 9 ou 10, comprenant un circuit de blocage RF permettant de fournir un trajet de courant pour un courant résultant d'un quelconque déséquilibre CC entre les signaux de courant détectés des premier et second éléments de détection de lumière.

13. Système de communication optique sans fil comprenant :
un ou plusieurs circuits de transmission tels que revendiqués chacun dans la revendication 1 ; et
un ou plusieurs circuits de réception tels que revendiqués chacun dans la revendication 9.

14. Procédé permettant de transmettre des données à l'aide d'une communication optique sans fil, comprenant :
l'utilisation d'un premier élément d'émission de lumière pour émettre de la lumière ayant une première caractéristique de lumière ;
l'utilisation d'un second élément d'émission de lumière pour émettre de la lumière ayant une seconde caractéristique de lumière, différente de la première caractéristique de lumière ;
le pilotage des premier et second éléments d'émission de lumière à l'aide d'un signal de modulation bipolaire,
dans lequel
le second élément d'émission de lumière est topologiquement en série avec le premier élément d'émission de lumière ;
et le procédé comprend :
le réglage de conditions de polarisation des premier et second éléments d'émission de lumière, et dans lequel le pilotage du premier élément d'émission de lumière comprend le pilotage d'une première polarité d'un signal de modulation bipolaire à travers le premier élément d'émission de lumière vers une borne de référence ; et
le pilotage du second élément d'émission de lumière comprend le pilotage d'une seconde polarité, opposée à la première polarité, du signal de modulation bipolaire à travers le second élément d'émission de lumière vers la borne de référence, implémentant de ce fait une modulation OFDM bipolaire.

15. Procédé de réception de données à l'aide d'une communication optique sans fil, comprenant :
la détection d'un signal de lumière à modulation OFDM incidente ayant une première caractéristique de lumière à l'aide d'un premier élément de détection de lumière ayant une première caractéristique de détection de lumière ;
la détection d'un signal de lumière à modulation OFDM incidente ayant une seconde caractéristique de lumière à l'aide d'un second élément de détection de lumière, le second élément de détection ayant une seconde caractéristique de détection de lumière, différente de la première caractéristique de détection de lumière ;
dans lequel
le second élément de détection de lumière est topologiquement en série avec le premier élément d'émission de lumière avec la même polarité et les premier et second éléments de détection de lumière sont connectés au niveau d'un nœud de jonction ; et
le procédé comprend :
le réglage de conditions de polarisation des premier et second éléments de détection de lumière ; et
la réception et l'amplification d'un signal de courant détecté résultant provenant du nœud de jonction entre les premier et second éléments de détection de lumière.
